# EUROPÄISCHE PATENTANMELDUNG

(11) **EP 1 309 226 A2**
(43) Veröffentlichungstag der Anmeldung: **07.05.2003**
(21) Anmeldenummer: 02024073.5
(22) Anmeldetag: 29.10.2002
(51) Int. Cl.: H05B 3/74

(54) **Isolierung für eine Wärmequelle, insbesondere eine elektrische Heizungseinrichtung**

(30) Priorität: 05.11.2001 DE 10154887
(71) Anmelder: E.G.O. ELEKTRO-GERÄTEBAU GmbH, D-75038 Oberderdingen (DE)
(72) Erfinder: Kicherer, Robert, 75038 Oberderdingen (DE); Mangler, Matthias, 76307 Karlsbad (DE); Mikschl, Bernard, 75056 Sulzfeld (DE); Pfob, Horst, 75031 Eppingen (DE); Wilde, Eugen, 75438 Knittlingen (DE)
(74) Vertreter: Patentanwälte Ruff, Wilhelm, Beier, Dauster & Partner

(57) **Zusammenfassung**

Bei einer Ausführungsform der Erfindung wird eine Isolierung (11) für eine Strahlungsheizung (21) geschaffen, die beispielsweise drei Reflektoren (13 a-c) und zwei dazwischen liegende Abstandshalterschichten (15 a, b) aus Wärmedämmaterial aufweist. Dabei sind die Reflektoren (13 a-c) vor allem für den Wärmestrahlungsanteil ausgelegt und die Wärmedämmschichten (15 a, b) für die Wärmeleitung. Die Isolierung kann als Mehrschicht- bzw. Verbundfolie ausgebildet sein. Die Reflektoren (13 a-c) können aus Aluminium, die Wärmedämmschichten (15 a, b) aus Glasgewebe o. dgl. bestehen.

## Beschreibung

Die Erfindung betrifft eine Isolierung nach dem Oberbegriff des Anspruchs 1 für eine Wärmequelle und eine Heizungseinrichtung. Insbesondere ist die Wärmequelle eine elektrische Heizungseinrichtung, mit wenigstens zwei Reflektoren und einem Abstandshalter bzw. einer Abstandshalterung zwischen den Reflektoren.

Eine Isolierung dieser Art ist beispielsweise aus der DE 42 21 626 bekannt. Es handelt sich um eine Reflektoranordnung für ein Strahlungsheizelement, das unter einem Glaskeramikkochfeld angeordnet ist. Unter dem Strahlungsheizelement sind mehrere schalenförmige Reflektoren angebracht, die durch kleine Abstandshalter voneinander getrennt sind. Mit diesen Reflektoren soll eine konventionelle Wärmedämmung des Strahlungsheizelementes ersetzt werden.

Eine derartige Isolierung bzw. Reflektoranordnung weist den Nachteil auf, daß für eine ausreichende Isolierwirkung viele Reflektoren bzw. Schichten benötigt werden für einen guten Wirkungsgrad.

### Aufgabe und Lösung

Der Erfindung liegt die Aufgabe zugrunde, eine eingangs genannte Isolierung sowie eine Heizungseinrichtung zu schaffen, deren Wirkungsgrad bei gleichbleibendem Aufwand für die Herstellung bzw. Verarbeitung verbessert sind.

Diese Aufgabe wird gelöst durch eine Isolierung mit den Merkmalen des Anspruchs 1 sowie eine Heizungseinrichtung mit den Merkmalen des Anspruchs 11. Vorteilhafte sowie bevorzugte Ausführungsformen sind Gegenstand der weiteren Ansprüche und werden im folgenden beschrieben. Der Wortlaut der Ansprüche wird durch ausdrückliche Bezugnahme zum Inhalt der Beschreibung gemacht.

Eine Abstandshalterung zwischen den Reflektoren verbessert zum einen deren Reflektorwirkung. Erfindungsgemäß wird die Abstandshalterung zur thermischen Dämmung, insbesondere gegen Wärmeleitung, benutzt und erhöht auf diese Weise den Wirkungsgrad. Dazu ist die Abstandshalterung vorteilhaft aus thermisch isolierendem bzw. dämmendem Material gefertigt und flächig zwischen zwei Reflektoren bzw. Reflektorschichten ausgedehnt. Durch die Kombination von Reflektoren gegen Wärmestrahlung sowie thermischem Isoliermaterial bzw. Dämmaterial gegen Wärmeleitung können sehr vorteilhaft und wirkungsvoll beide Arten von Wärmeübertragung unterbunden werden.

Bevorzugt nimmt ein Abstandshalter bzw. die Abstandshalterung einen Großteil, besonders bevorzugt die gesamte, Fläche zwischen zwei Reflektoren ein. Es ist von Vorteil, wenn die Abstandshalterung eine im wesentlichen konstante Dicke aufweist, so daß die Reflektoren parallel zueinander verlaufen. Hierdurch werden eine besonders effektive Rückstrahlung der Wärme erreicht sowie besonders heiße Durchgangsstellen an dünnen Stellen der Abstandshalterung vermieden.

Die Isolierung kann mit ihren mehreren Schichten beispielsweise als Mehrschichtfolie ausgebildet sein. Ebenso ist es möglich, sie als Verbundfolie, die leicht verarbeitbar ist, herzustellen.

Erfindungsgemäß sind mindestens zwei Reflektoren vorgesehen. Besonders vorteilhaft wird eine Anordnung mit drei Reflektoren und jeweils einer Abstandshalterung zwischen zwei Reflektoren angesehen.

Die Isolierung verläuft bevorzugt beim Einsatz für eine Wärmequelle in einer Ebene bzw. ohne größere Knicke oder Biegungen. Um gebogene oder eckige Formen mit einer erfindungsgemäßen Isolierung zu bedecken, sollten mehrere voneinander getrennte Stücke verwendet werden. Die Isolierung sollte wegen ihrer Dicke möglichst nicht verbogen oder geknickt werden.

Vorteilhaft ist die Abstandshalterung siliziumhaltig, es kann beispielsweise Siliziumkarbid verwendet werden. Weitere Möglichkeiten sind Glasgewebe, pyrogene Kieselsäure oder Kieselsol.

Einerseits kann die Abstandshalterung eine Schicht aus einem Gewebe sein, beispielsweise einem dünnen Glasgewebe. Dieses bietet auch eine gewisse mechanische Eigenstabilität, um die Funktion als Abstandshalterung zu gewährleisten. Ein Glasgewebe kann zusätzlich mit weiterem Material versetzt bzw. aufgefüllt werden, beispielsweise einem feinen Pulver.

Eine andere Möglichkeit ist eine Abstandshalterschicht, die im wesentlichen aus Pulver besteht. Hierzu kann insbesondere ein feines Pulver, beispielsweise aus Kieselsäure, verwendet werden. Zusätzlich zu dem Pulver kann als Abstandshalterung ein festes Bauteil, beispielsweise in bestimmten Abständen, eingesetzt werden, das seinerseits den größten Teil der Abstandshalterfunktion mit einer gewissen Vorgabe übernimmt. Das Pulver sorgt für die Abstandshalterung in den Zwischenbereichen.

Zusätzlich zu wärmedämmenden Materialien für die Abstandshalterung kann ein Trübungsmittel vorgesehen sein. Dieses ist entweder mit einem Wärmedämmaterial in einer Abstandshalterungsschicht vermischt, oder es wird bei einem Mehrschichtaufbau eine im wesentlichen aus Trübungsmittel bestehende Schicht vorgesehen. Das Trübungsmittel ist vorteilhaft siliziumhaltig, beispielsweise Ruß, Siliziumkarbid, Ilminit, Rutil oder Zirkonsilikat.

Ist eine Isolierung nach Art einer Mehrschichtfolie oder Sandwichstruktur aufgebaut, so ist es möglich, daß verschiedene Materialien bzw. Abstandshalterungen mit verschiedenen Eigenschaften verwendet werden. Hierdurch kann eine Optimierung der Funktion vorgenommen werden.

Die Dicke des Abstandshalters ist bevorzugt weitaus größer als die der Reflektoren. Sie kann zwischen 10 oder 50 und 100 mal so groß sein. Eine vorteilhafte Dicke für den Abstandshalter liegt im Bereich zwischen 10 und 1.000 µm, beispielsweise bei ca. 100 µm.

Des weiteren betrifft die Erfindung eine Heizungseinrichtung, die eine solchermaßen aufgebaute Isolierung mit den Merkmalen des unabhängigen Anspruchs 11 aufweist. Sie kann in einer Aufnahmeschale o. dgl. untergebracht sein. Vorteilhaft ist die Heizungseinrichtung ein Heizkörper oder ein Strahlungsheizkörper und liegt auf einer konventionellen Wärmedämmung auf bzw. ist zum Teil in dieser befestigt. Unterhalb der Wärmedämmung ist eine erfindungsgemäße Isolierung angeordnet, bevorzugt in Form einer Mehrschichtfolie.

Gemäß einer weiteren Anwendung der Erfindung kann eine erfindungsgemäße Isolierung bzw. Mehrschichtfolie zwischen zwei konventionellen Dämmschichten angeordnet sein. Somit wird durch eine obere Dämmschicht die erfindungsgemäße Isolierung vor der direkten, sehr hohen Hitzeeinwirkung durch den Heizkörper geschützt. Durch ihre Reflexionswirkung vor allem gegenüber Wärmestrahlung kann sie vorteilhaft relativ nahe an dem Heizkörper angeordnet sein und einen großen Teil der Wärmestrahlung aufhalten. Ihr nachgeschaltet ist erneut konventionelles Dämmaterial, um den Rest an durchgehender Wärme, insbesondere aufgrund von Wärmeleitung, von der Außenumgebung abhalten.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

### Kurzbeschreibung der Zeichnungen

Ein Ausführungsbeispiel der Erfindung ist in den Zeichnungen schematisch dargestellt und wird im folgenden näher beschrieben. In den Zeichnungen zeigen:
- Fig. 1: eine vergrößerte Aufnahme eines Schnittes durch eine erfindungsgemäße Mehrschichtfolie und
- Fig. 2: einen Schnitt durch einen Strahlungsheizkörper mit Wärmedämmung und die erfindungsgemäße Mehrschichtfolie aus Fig. 1.

### Detaillierte Beschreibung der Ausführungsbeispiele

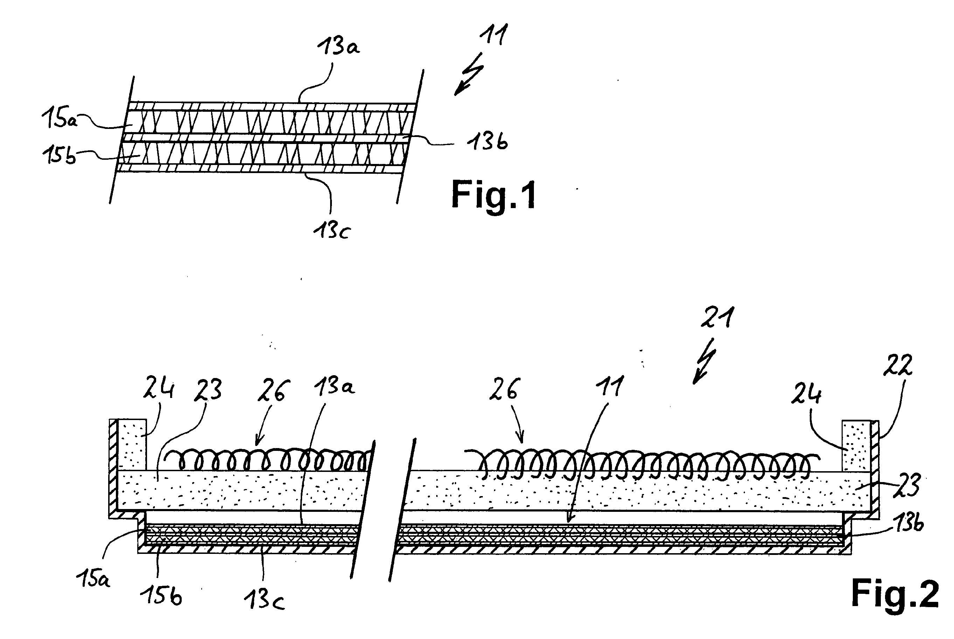

In Figur 1 ist in vergrößerter Darstellung ein Schnitt durch eine erfindungsgemäße Mehrschichtfolie 11 dargestellt. Sie besteht aus Reflektoren 13a, 13b und 13c. Diese können beispielsweise aus Aluminium, besonders vorteilhaft poliertem Aluminium, in Folienform bestehen. Ebenso bieten sich andere Materialien an, die üblicherweise für Wärmereflektoren eingesetzt werden. Möglich sind auch Reflektoren mit einem Trägermaterial, beispielsweise Aluminium,' auf das eine besonders reflektierende Schicht aufgetragen bzw. aufgedampft ist. Grundsätzlich ist zu beachten, daß die näher an der Heizeinrichtung liegenden Reflektoren eine größere Wärmebeständigkeit aufweisen.

Zwischen den Reflektoren 13a, 13b und 13c sind Wärmedämmschichten 15a und 15b als Abstandshalterungen vorgesehen. Die Wärmedämmschichten 15a und 15b können einerseits ein eigenstabiles Gewebe oder Gewirke o. dgl. sein, beispielsweise dünnes Glasgewebe. Alternativ sind rieselfähige oder pulverförmige Materialien wie Kieselsäure oder Kieselsol verwendbar.

Wie aus Figur 1 zu erkennen ist, verlaufen die Reflektoren 13a-c parallel zueinander. Das bedeutet, daß die Wärmedämmschichten 15a und 15b als Abstandshalterungen eine gewisse Stabilität bzw. Druckbeständigkeit aufweisen sollten. Dies kann entweder durch eine Eigenstabilität der Wärmedämmschicht erreicht werden. Alternativ, beispielsweise bei Einsatz von Pulvern als Wärmedämmaterial, sollten zusätzliche Abstandshalter vorgesehen werden. Diese sorgen nach Art einer Steppdecke o. dgl. für die Einhaltung des richtigen Abstandes zu den Reflektoren durch eine verteilte Anordnung, so daß die Zwischenräume mit Wärmedämmaterial aufgefüllt werden können.

Es ist von Vorteil, wenn zwischen den Reflektoren 13a-c und den Wärmedämmschichten 15a-b eine Befestigung vorhanden ist, insbesondere eine Verklebung. Dadurch kann auf vorteilhafte Weise ein sehr gut handhabbarer und mechanisch ausreichend stabiler Verbund hergestellt werden.

In Figur 2 ist ein erfindungsgemäßer Strahlungsheizkörper 21 dargestellt. In einer Trägerschale 22, beispielsweise aus dünnem Blech, liegt flächiges Wärmedämmaterial. Dieses ist konventionell ausgebildet, beispielsweise Vermiculite. Es bildet nicht nur den Boden 23, sondern auch einen umlaufenden Randbereich 24.

Auf dem konventionellen Wärmedämmboden 23 sitzt eine Strahlungsheizung in Form einer Glühwendel 26. Im linken Teil des Schnitts ist sie auf das Wärmedämmaterial 23 aufgelegt, im rechten Teil zum Teil darin eingebettet dargestellt. Im Heizbetrieb erreicht die Strahlungsheizung 26 Temperaturen von ca. 700 bis 900°C, gegen die die Umgebung abgeschirmt werden muß.

Unterhalb des Wärmedämmbodens 23 ist in eine entsprechende Ausformung der Trägerschale 22 eine erfindungsgemäße Mehrschichtfolie 11 eingelegt. Sie weist den Aufbau auf, der in Figur 1 vergrößert dargestellt ist. Sie besteht also aus drei Reflektoren 13a-c und zwei dazwischen liegenden Wärmedämmschichten 15a und 15b. Zwar ist in Figur 2 zwischen Boden 23 und Mehrschichtfolie 11 ein gewisser Abstand dargestellt. Dieser kann jedoch auch entfallen und der Boden direkt auf der Mehrschichtfolie aufliegen. Damit ist eine kompakte, flache Bauweise möglich.

Wie aus Figur 2 zu erkennen ist, deckt die Mehrschichtfolie 11 im wesentlichen den gesamten Bereich der Strahlungsheizung 26 nach unten hin ab. Somit ist eine sehr gute Dämmwirkung erreicht.

Um eine Wasserdampfabfuhr von dem Wärmedämmaterial 23 an die Außenumgebung hin zu gewährleisten, kann einerseits die Mehrschichtfolie 11 mit einigen wenigen Perforierungen versehen werden, beispielsweise bei einem üblichen Strahlungsheizkörper mit 150 mm Durchmesser 1-20 Perforierungen. Ein solcher Wasserdampfdurchlaß sollte auch in der Trägerschale 22 vorhanden sein. Um eine Perforierung der Mehrschichtfolie zu vermeiden, kann ein solcher Wasserdampfauslaß auch in einem seitlichen Bereich der Trägerschale zwischen Mehrschichtfolie und Wärmedämmaterial vorgesehen sein. Bei dem Ausführungsbeispiel gemäß Figur 2 wäre dies der freie Bereich zwischen Wärmedämmschicht 23 und der Mehrschichtfolie. Hier kann der Außenrand der Trägerschale 22 perforiert sein.

## Patentansprüche

1. Isolierung für eine Wärmequelle, insbesondere eine elektrische Heizungseinrichtung (26), mit wenigstens zwei Reflektoren (13 a-c) und einem Abstandshalter (15 a, b) zwischen den Reflektoren, **dadurch gekennzeichnet, daß** der Abstandshalter (15 a, b) aus thermisch isolierendem Material besteht und flächig ausgedehnt ist.

2. Isolierung nach Anspruch 1, **dadurch gekennzeichnet, daß** ein Abstandshalter (15 a, b) im wesentlichen die gesamte Fläche zwischen zwei Reflektoren (13 a-c) einnimmt.

3. Isolierung nach Anspruch 1 oder 2, **dadurch gekennzeichnet, daß** sie als Mehrschichtfolie (11), vorzugsweise als Verbundfolie, ausgebildet ist.

4. Isolierung nach einem der vorhergehenden Ansprüche, **dadurch gekennzeichnet, daß** sie drei Reflektoren (13 a-c) mit jeweils einem Abstandshalter (15 a, b) dazwischen aufweist.

5. Isolierung nach einem der vorhergehenden Ansprüche, **dadurch gekennzeichnet, daß** der Abstandshalter (15 a, b) siliziumhaltig ist, vorzugsweise Siliziumkarbid ist.

6. Isolierung nach einem der vorhergehenden Ansprüche, **dadurch gekennzeichnet, daß** der Abstandshalter (15 a, b) Gewebe aufweist, vorzugsweise ein dünnes Glasgewebe.

7. Isolierung nach einem der vorhergehenden Ansprüche, **dadurch gekennzeichnet, daß** der Abstandshalter (15 a, b) ein Pulver aufweist, vorzugsweise ein feines Pulver, insbesondere Kieselsäure.

8. Isolierung nach einem der vorhergehenden Ansprüche, **dadurch gekennzeichnet, daß** der Abstandshalter (15 a, b) ein Trübungsmittel aufweist, vorzugsweise ein siliziumhaltiges Trübungsmittel.

9. Isolierung nach einem der vorhergehenden Ansprüche, **dadurch gekennzeichnet, daß** bei mehreren Abstandshaltern (15 a, b) jeweils Abstandshalter aus verschiedenen Materialien eingesetzt sind.

10. Isolierung nach einem der vorhergehenden Ansprüche, **dadurch gekennzeichnet, daß** die Dicke des Abstandshalters (15 a, b) bis zu zehnmal, vorzugsweise bis zu einhundertmal, so groß ist wie die der Reflektoren (13 a-c), wobei insbesondere der Abstandshalter (15 a, b) zwischen 10 µm und 1.000 µm dick ist.

11. Heizungseinrichtung, insbesondere Strahlungsheizeinrichtung (21), **dadurch gekennzeichnet, daß** sie zur thermischen Isolierung eine Isolierung (11) nach einem der vorhergehenden Ansprüche aufweist.
